# EUROPEAN PATENT APPLICATION

(11) **EP 4 737 192 A1**
(43) Date of publication of application: **06.05.2026**
(21) Application number: 25213024.0
(22) Date of filing: 03.11.2025
(51) Int. Cl.: B60L 53/16

(54) **ELECTRICAL CONNECTOR ASSEMBLY FOR A VEHICLE**

(30) Priority: 05.11.2024 IT 202400024762
(71) Applicant: IVECO S.P.A., 10156 Torino (IT)
(72) Inventor: RUSSO, Gerardo, 10156 Torino (IT)
(74) Representative: Studio Torta S.p.A.

(57) **Abstract**

Electrical connector assembly (10; 10'; 10"; 10^{III}; 10^{IV}) for a vehicle (1; 1'; 1"; 1^{III}; 1^{IV}) comprising a first body (11) and a second body (12; 12"; 12^{III}) comprising at least a first electrical connector (20) and at least a second electrical connector (21). The first body (11) and the second body (12; 12"; 12^{III}) are movable with respect to each other between a first configuration, wherein the first electrical connector (20) is adapted to be engaged by a third electrical connector (50) and the first body (11) obstructs at least in part the second electrical connector (21) and a second configuration, wherein the second electrical connector (21) is adapted to be engaged by a fourth electrical connector (51) and the first body (11) obstructs at least in part the first electrical connector (20).

## Description

### CROSS-REFERENCE TO RELATED APPLICATIONS

This patent application claims priority from Italian patent application no. 102024000024762 filed on November 5, 2024, the entire disclosure of which is incorporated herein by reference.

### TECHNICAL FIELD

The present invention relates to an electrical connector assembly. The present invention finds its preferred, although not exclusive, application in a heavy vehicle, such as a lorry. Reference will be made to this application hereunder purely by way of example.

### BACKGROUND ART

There are known electric or hybrid vehicles, which essentially comprise:
- a main body;
- a plurality of wheels rotatable with respect to the main body about respective axes of rotation;
- electrical energy storage means, for example a battery; and
- at least one electric motor electrically connected to the electrical energy storage means and operatively connected to at least some of the wheels.

In order to charge the electrical energy storage means, it is also known to connect the vehicle to an electrical energy source, for example a charging station, by means of an electrical cable. Specifically, vehicles comprise a first electrical connector (for example, an electrical socket) electrically connected to the electrical energy storage means and adapted to be electrically and mechanically connected to a second electrical connector (i.e., an electrical plug) carried by the electrical cable of the charging station.

The continuous improvement of charging technologies of electric or hybrid vehicles has led to the availability on the market of first and second connectors of various types. Consequently, to allow the electrical connection of vehicles to a charging station it is not always sufficient that the vehicle is equipped with a generic first electrical connector, but that the vehicle is equipped with a first electrical connector compatible with the second electrical connector of the charging station.

In order to reduce the risk that an electric or hybrid vehicle cannot be electrically charged due to the fact that the electrical equipment required for connection to the electrical energy source is not available on board, the possibility of equipping vehicles with at least two first connectors of different types from each other has been evaluated.

Nevertheless, for reasons of electrical safety, the use of more than one first connector on board the vehicle makes it necessary to allow electrical connection of the vehicle to the electrical energy source by means of only one first connector at a time. In particular, it is necessary that, while the vehicle is connected to the electrical energy source by means of a first connector, all other first connectors on board the vehicle must be electrically isolated. In fact, an accidental contact with first connectors which are not electrically isolated and not connected to the electrical energy source, would expose users to very high voltages.

In particular, to electrically isolate the first connectors from each other, it is possible to use the same number of electromechanical switches. However, the switches are at times costly and are somewhat bulky and heavy.

Therefore, there is the need to provide first connectors of different types from each other on board vehicles, however without encountering the above-mentioned problems.

The object of the present invention is to satisfy the above-mentioned need in an optimized and inexpensive way.

EP4333217A1, US10266058B2 and GB2599152A illustrate respective examples of electrical connector assemblies for vehicles.

### SUMMARY OF THE INVENTION

The aforesaid object is achieved by an electrical connector assembly as claimed in the appended claims, which are an integral part of the present description.

### BRIEF DESCRIPTION OF THE DRAWINGS

For a better understanding of the present invention, there are described below five preferred embodiments, provided by way of non-limiting example and with reference to the accompanying drawings, wherein:
- Fig. 1 is a perspective view of an electrical connector assembly according to a first embodiment of the present invention and in a first operating configuration, with parts removed for clarity;
- Fig. 2 is a perspective view of the assembly of connectors of Fig. 1 in a second operating configuration, with parts removed for clarity;
- Figs. 3A and 3B are top views of the assembly of connectors of Figs. 1 and 2, in the first operating configuration and in the second operating configuration, respectively, with parts removed for clarity;
- Figs. 4A and 4B are top views of a connector assembly according to a second embodiment of the present invention, in a first operating configuration and in a second operating configuration, respectively, with parts removed for clarity;
- Figs. 5A and 5B are side views of a connector assembly according to a third embodiment of the present invention, in a first operating configuration and in a second operating configuration, respectively, with parts removed for clarity;
- Fig. 6 is a perspective view of an electrical connector assembly according to a fourth embodiment of the present invention and in a first operating configuration, with parts removed for clarity;
- Figs. 7A and 7B are top views of the assembly of connectors of Fig. 6, in the first operating configuration and in a second operating configuration, respectively, with parts removed for clarity;
- Fig. 8 is a perspective view of an electrical connector assembly according to a fifth embodiment of the present invention and in a first operating configuration, with parts removed for clarity.

### DETAILED DESCRIPTION OF THE INVENTION

The accompanying figures illustrate, only in part and indicated with the reference number 1, a vehicle of commercial type, in particular a heavy vehicle, such as a lorry.

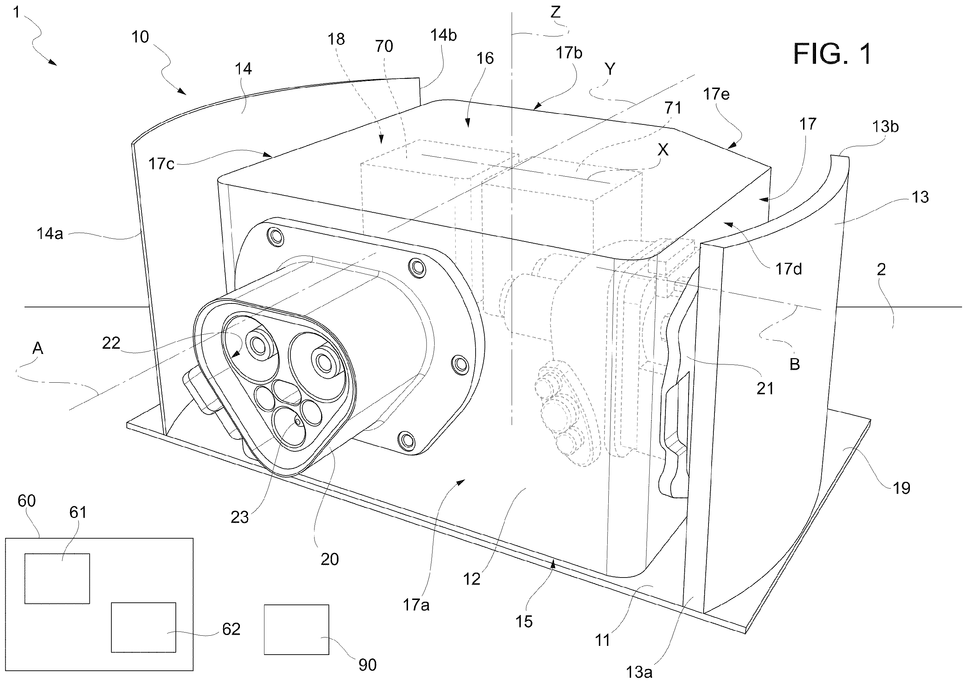

The vehicle 1 essentially comprises a main body 2, a plurality or wheels or tracks, not illustrated, and an electrical system 60, only schematically illustrated in Fig. 1.

The electrical system 60 comprises, in turn, an electrical energy storage device 61, for example, one or more batteries and an electric motor 62 electrically connected to the storage device 61.

In detail, the electric motor 62 is operatively connected to the wheels or tracks in at least some operating conditions of the vehicle 1. Therefore, the vehicle 1 is an electric or hybrid vehicle.

The vehicle 1 further comprises an electrical connector assembly 10, which comprises a body 11 and a body 12 comprising a first electrical connector 20 and a second electrical connector 21.

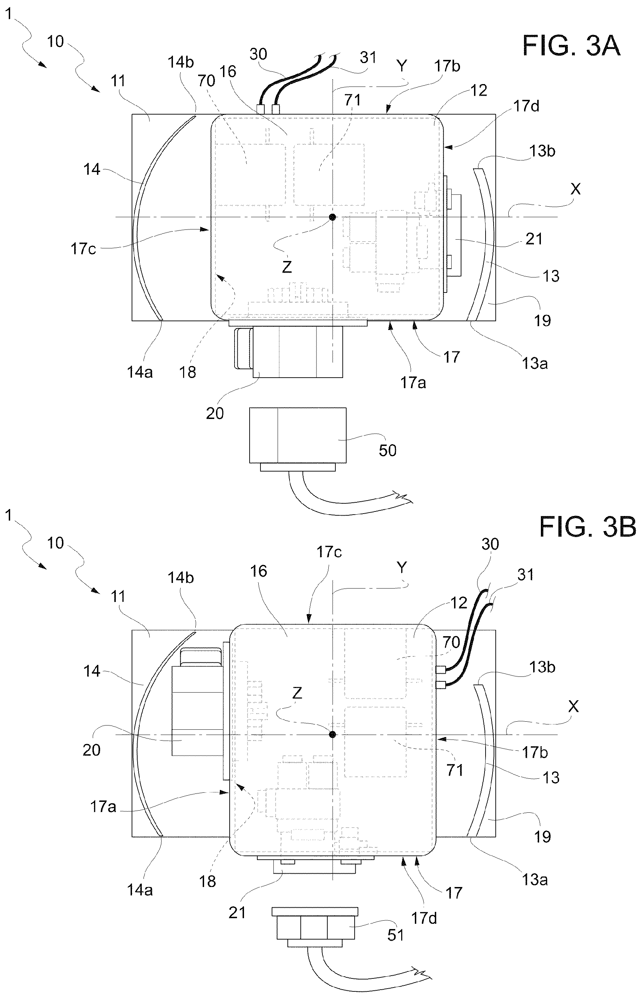

In detail, the first electrical connector 20 and the second electrical connector 21 are electric sockets of different types from each other and are electrically connected to the system 60. In further detail, the first electrical connector 20 and the second electrical connector 21 are electrically connected to the system 60 by means of respective electrical cables 30 and 31 (Figs. 3A and 3B). It must be specified that the electrical cables 30, 31 are schematically represented in the accompanying figures and that the relative dimensions are not necessarily illustrated proportionally to the dimensions of the other parts of the assembly 10. Specifically, one of the electrical cables 30, 31 is a positive cable of the vehicle 1 and other of the two electrical cables 30, 31 is a negative cable of the vehicle 1.

In the embodiment illustrated, the first electrical connector 20 and the second electrical connector 21 are arranged transversally to each other. Preferably, the first electrical connector 20 and the second electrical connector 21 are arranged orthogonally to each other.

In detail, the first electrical connector 20 extends mainly along a direction A and the second electrical connector 21 extends mainly along a direction B and the directions A and B are orthogonal to each other. In further detail, the first electrical connector 20 comprises a plurality of openings 22 and/or protrusions 23 extending parallel to the direction A; the second electrical connector 21 comprises a plurality of openings 22 and/or protrusions 23 extending parallel to the direction B.

In at least some operating conditions of the assembly 10, the first electrical connector 20 is adapted to be engaged by a third electrical connector 50 of an electrical energy source (Fig. 3A). Specifically, the electrical energy source is external to the vehicle 1 and is, for example, a charging station for vehicles.

Moreover, in at least some operating conditions of the assembly 10, the second electrical connector 21 is adapted to be engaged by a fourth electrical connector 51 of the electrical energy source (Fig. 3B).

The third electrical connector 50 is compatible with the first electrical connector 20, i.e., is adapted to cooperate with its openings 22 and/or protrusions 23, obtaining the electrical connection between the assembly 10 and the electrical energy source. The fourth electrical connector 51 is compatible with the second electrical connector 21, i.e., is adapted to cooperate with its openings 22 and/or protrusions 23, obtaining the electrical connection between the assembly 10 and the electrical energy source.

In detail, when the first electrical connector 20 and the third electrical connector 50 engage with each other or when the second electrical connector 21 and the fourth electrical connector 51 engage with each other, the system 60 is electrically connected to the electrical energy source. Consequently, the storage device 61 can be charged by the electrical energy source.

In more detail, as illustrated in Figs. 3A and 3B, the assembly 10 further comprises two contactors 70, 71, each of which is electrically connected to the first and to the second electrical connector 20, 21. Additionally, one of the two contactors 70, 71 is electrically connected to the electrical cable 30 and the other of the two contactors 70, 71 is electrically connected to the electrical cable 31.

Each contactor 70, 71 is configured to:
- allow the passage of electrical current between the respective electrical cable 30, 31 and the electrical connectors 20, 21 when the first electrical connector 20 and the third electrical connector 50 engage with each other or when the second electrical connector 21 and the fourth electrical connector 51 engage with each other; and
- prevent the passage of electrical current between the respective electrical cable 30, 31 and the electrical connectors 20, 21 when the first electrical connector 20 and the third electrical connector 50 are disengaged from each other and when the second electrical connector 21 and the fourth electrical connector 51 are disengaged from each other.

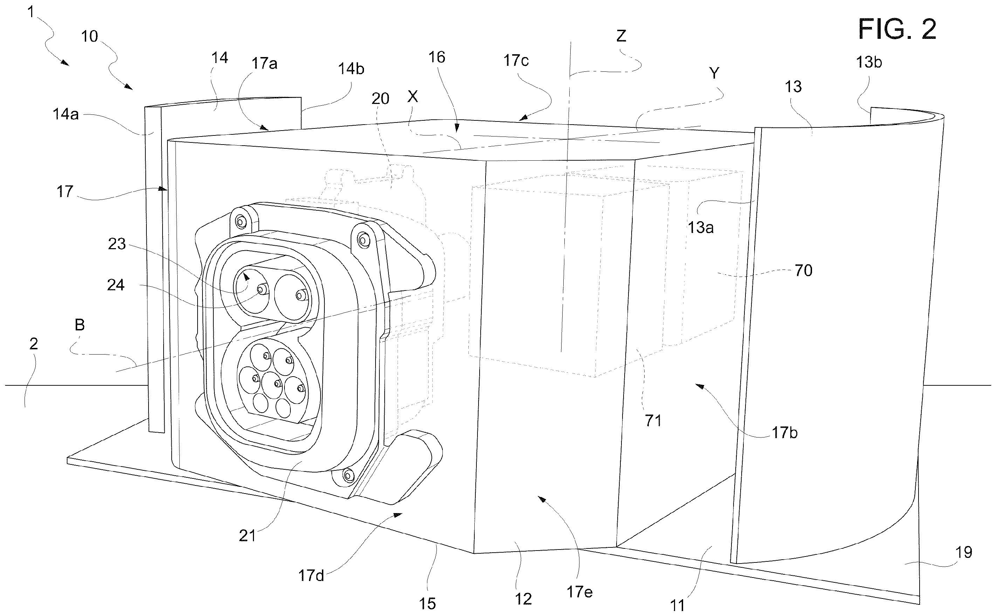

Advantageously, the body 11 and the body 12 are movable with respect to each other between:
- a first configuration, wherein the first electrical connector 20 is adapted to be engaged by the third electrical connector 50 and the body 11 obstructs and/or occludes at least in part the second electrical connector 21 (Figs. 1 and 3A); and
- a second configuration, wherein the second electrical connector 21 is adapted to be engaged by the fourth electrical connector 51 and the body 11 obstructs and/or occludes at least in part the first electrical connector 20 (Figs. 2 and 3B).

In detail, when the body 11 obstructs the first electrical connector 20 or the second electrical connector 21, it prevents such first or second electrical connector 20, 21 from being engaged by the respective third or fourth electrical connector 50, 51. In other words, when the body 11 obstructs the first electrical connector 20 or the second electrical connector 21, it mechanically prevents the electrical connection between such first or second electrical connector 20, 21 and the electrical energy source.

In the embodiment illustrated, the body 11 is fixed to or integral with the main body 2 or carried by main body 2, while the body 12 can rotate with respect to the body 11 between the first configuration and the second configuration.

As illustrated in Figs. 1 and 2, the body 11 defines a reference system, comprising:
- a direction X, preferably horizontal to the ground on which the vehicle 1 rests;
- a direction Y transversal to the direction X and preferably also horizontal to the ground; and
- a direction Z transversal to the directions X and Y.

In detail, the direction Z is orthogonal to the directions X and Y. Moreover, preferably, the direction X corresponds to the direction of longitudinal extension of the vehicle 1. Additionally, the adjective "upper" must be intended with reference to the ground.

Specifically, the body 12 is rotatable with respect to the body 11 about the direction Z. In particular, the body 12 is rotatable in contact with the body 11.

In detail, the body 11 comprises a base surface 19, at which it is fixed to the main body 2 and two walls 13, 14 spaced apart from each other along the direction X.

In further detail, the base surface 19 is flat and has a rectangular shape in a plane orthogonal to the direction Z. The walls 13 and 14 extend from the base surface 19 parallel or substantially parallel to the direction Z.

Specifically, the walls 13 and 14 extend along the direction Z from the base surface 19 to beyond the first connector 20 and the second connector 21. In the embodiment illustrated, the extension of the walls 13 and 14 along the direction Z is greater than or equal to the extension of the body 12 along the direction Z.

The body 12 is interposed between the walls 13 and 14 along the direction X. Additionally, when the assembly 10 is in the first configuration, the wall 13 faces the second connector 21 and obstructs it at least in part (Fig. 1); when the assembly 10 is in the second configuration, the wall 14 faces the first connector 20 and obstructs it at least in part (Fig. 2).

In more detail, when the assembly 10 is in the first configuration, the second connector 21 is interposed between the walls 13, 14 along the direction X; when the assembly 10 is in the second configuration, the first connector 20 is interposed between the walls 13, 14 along the direction X.

Moreover, when the assembly 10 is in the first configuration, the wall 14 is angularly spaced apart from the first connector 20 with respect to the direction Z (Fig. 1); when the assembly 10 is in the second configuration, the wall 13 is angularly spaced apart from the second connector 20 with respect to the direction Z (Fig. 2).

As illustrated in Figs. 1 and 2, the walls 13 and 14 are curved in a plane perpendicular to the direction Z and both have a concavity facing towards the body 12. Additionally, the extension of the wall 13 along a circumferential direction with respect to the direction Z is smaller than the extension of the wall 14 along the same circumferential direction (Figs. 3A and 3B).

In detail, the wall 13 comprises two ends 13a, 13b opposite each other along the circumferential direction; the wall 14 comprises two ends 14a, 14b opposite each other along the circumferential direction. In further detail, the ends 13a and 14a are aligned with each other along the direction X; vice versa, the distance between the end 13b and the end 13a along the direction Y is smaller than the distance between the end 14b and the end 14a along the direction Y.

The body 12 comprises a base surface 15 facing and/or cooperating with the body 11, an upper surface 16 facing away from the base surface 15 along the direction Z and a lateral surface 17 interposed between the base surface 15 and the upper surface 16 along the direction Z.

In detail, the base surface 15 cooperates in contact with the body 11. In further detail, the base surface 15 is in contact with the base surface 19.

In particular, the body 12 has a parallelepiped or substantially parallelepiped shape and the base surface 15 and the upper surface 16 are flat and directed perpendicularly to the direction Z.

The lateral surface 17 comprises, in turn, two flat faces 17a, 17b parallel to each other and two further flat faces 17c, 17d, parallel to each other and arranged transversally to the faces 17a and 17b. In detail, the faces 17c and 17d are orthogonal to the faces 17a and 17b.

The body 12 further comprises an inner volume 18 delimited by the base surface 15, by the upper surface 16 and by the lateral surface 17. The inner volume 18 is adapted to contain at least in part the first connector 20 and the second connector 21. The contactors 70 and 71 are also both housed in the inner volume 18. Additionally, preferably, the contactors 70 and 71 are adjacent to each other and/or arranged parallel to the direction B.

Moreover, preferably, the lateral surface 17 comprises a face 17e contiguous to the faces 17b and 17d and arranged obliquely with respect to both. In detail, the face 17e is flat. In other words, the face 17e forms a bevel of one of the corners of the rectangular shape of the body 12 in a plane orthogonal to the direction Z.

The face 17e is shaped to prevent interferences between the body 12 and the wall 13 during rotation of the body 12 about the direction Z. Specifically, when the assembly 10 is in the first configuration, the face 17e is arranged on the side of the end 13b (Fig. 1).

Moreover, in the embodiment illustrated, the faces 17a and 17d are contiguous to each other and the faces 17a and 17c are contiguous to each other. Additionally, the body 12 has a round fillet between the faces 17a and 17d and between the faces 17a and 17c.

The first and the second connector 20 and 21 pass through the lateral surface 17. In detail, the first connector 20 passes through the face 17a and the second connector 21 passes through the face 17d. In further detail, the first connector 20 protrudes from the face 17a on the side opposite to the face 17b and parallel to the direction A; the second connector 21 protrudes from the face 17d on the side opposite to the face 17c and parallel to the direction B.

As illustrated in Figs. 3A and 3B, also the electrical cables 30 and 31 pass through the lateral surface 17. In detail, the electrical cables 30 and 31 are electrically connected to the first connector 20 and to the second connector 21 on the side of the inner volume 18 and exit from the inner volume 18 through the lateral surface 17. In further detail, the electrical cables 30 and 31 both pass through the face 17b. Even more in detail, the electrical cables 30 and 31 pass through the face 17b at respective distinct openings placed at the same distance from the base surface 15 along the direction Z.

Preferably, the assembly 10 comprises a cooling system 90 only schematically illustrated in Fig. 1 and adapted to cool the body 12. The cooling system 90 is of passive type. For example, the cooling system 90 comprises a plurality of fins at the upper surface 16 or at the lateral surface 17. Alternatively, the cooling system 90 is of active type and comprises one or more ducts adapted for a cooling fluid to pass through.

Operation of the embodiment of the electrical connector assembly 10 and of the vehicle 1 according to the invention described above is explained below, starting from a condition in which the assembly 10 is in the first configuration (Figs. 1 and 3A).

In this condition, the first connector 20 can be connected to a third connector 50, while the second connector 21 is obstructed by the body 11 and hence cannot be physically coupled to a fourth connector 51. In detail, the direction A is arranged parallel or substantially parallel to the direction Y and the direction B is arranged parallel or substantially parallel to the direction X. Additionally, the wall 13 faces the second connector 21, while the wall 14 faces the face 17c.

After having engaged the third connector 50 with the first connector 20, the external electrical energy source is connected to the system 60 through the connectors 20 and 50, the contactors 70 and 71, and the cables 30 and 31, which exit from the inner volume through the face 17b. At this point, it is possible to charge the electrical energy storage device 61.

If the electrical energy source is equipped with a fourth connector 51 and not with a third connector 50, the electrical connection of the system 60 to the electrical energy source is established simply by moving the assembly 10 from the first configuration to the second configuration.

In detail, the body 12 is rotated about the direction Z (clockwise, in the arrangement illustrated in Fig. 1). During rotation, the second connector 21 is moved progressively away from the wall 13 until it is accessible and can engage with the connector 51. Vice versa, the first connector 20 moves progressively towards the wall 14 until it is obstructed by it.

Additionally, during rotation of the body 12, the cables 30 and 31 also rotate with respect to the body 11. In detail, during rotation of the body 12, the cables 30 and 31 are deformed and their concavity varies. In further detail, for example, the concavity of the cables 30 and 31 at the face 17b in the configuration illustrated in Fig. 3A is opposite to the concavity of the cables 30 and 31 at the face 17b in the configuration illustrated in Fig. 3B.

After having engaged the fourth connector 51 with the second connector 21, the external electrical energy source is connected to the system 60 through the connectors 21 and 51, the contactors 70 and 71 and the cables 30 and 31. Therefore, also in this case it is possible to charge the electrical energy storage device 61.

Moreover, during operation the body 12 is cooled by means of the cooling system 90.

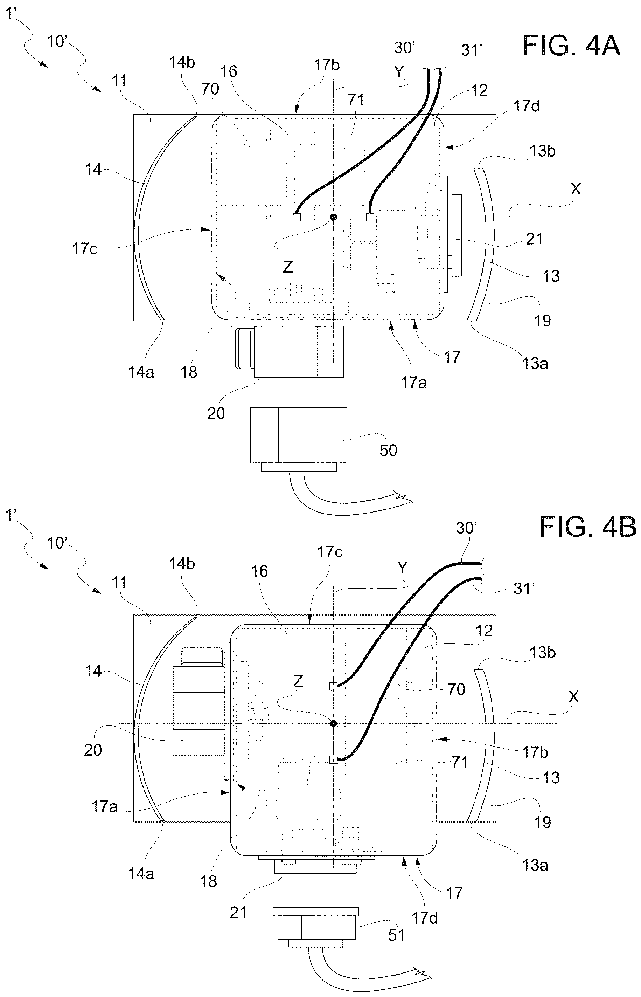

With reference to Figs. 4A and 4B, the reference number 1' indicates a vehicle according to a second embodiment of the present invention. The vehicle 1' is similar to the vehicle 1 and will be described below only insofar as it differs therefrom; identical or equivalent parts of the vehicles 1; 1' will be identified, where possible, by the same reference numbers.

The vehicle 1' differs from the vehicle 1 in that it comprises an electrical connector assembly 10' in place of the assembly 10. The assembly 10' is similar to the assembly 10 and will be described below only insofar as it differs therefrom; identical or equivalent parts of the assemblies 10; 10' will be identified, where possible, by the same reference numbers.

The assembly 10' differs from the assembly 10 in that the cables 30', 31' pass through the upper surface 16.

In detail, the electrical cables 30' and 31' are electrically connected to the first connector 20 and to the second connector 21 on the side of the inner volume 18 and exit from the inner volume 18 through the upper surface 16. More in detail, the electrical cables 30 and 31 pass through the upper surface 16 at respective distinct openings.

Operation of the assembly 10' is similar to operation of the assembly 10; therefore, its description is omitted for the sake of brevity.

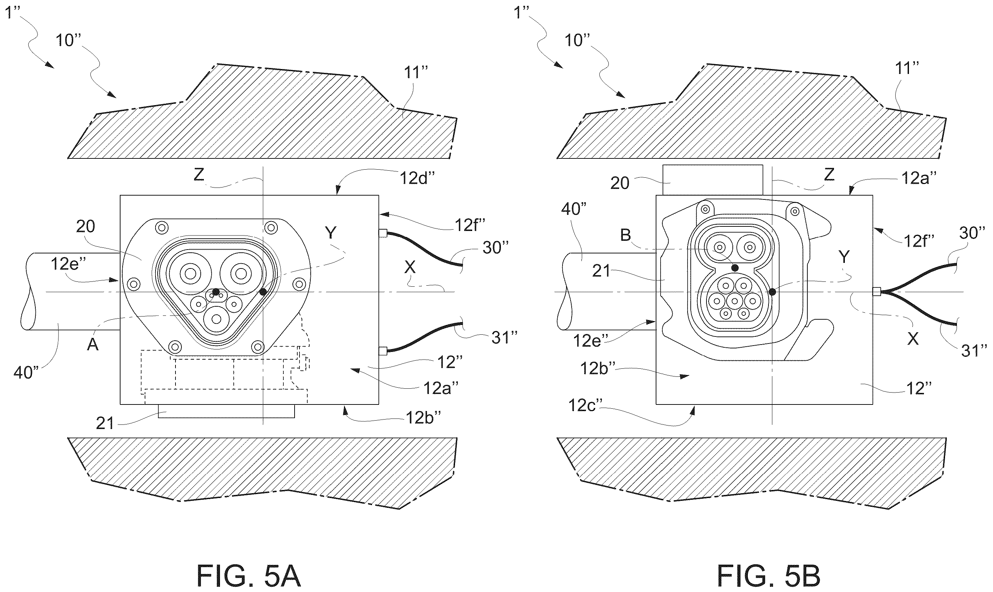

With reference to Figs. 5A and 5B, the reference number 1" indicates a vehicle according to a third embodiment of the present invention. The vehicle 1" is similar to the vehicle 1 and will be described below only insofar as it differs therefrom; identical or equivalent parts of the vehicles 1; 1" will be identified, where possible, by the same reference numbers.

The vehicle 1'' differs from the vehicle 1 in that it comprises an electrical connector assembly 10" in place of the assembly 10. The assembly 10" is similar to the assembly 10 and will be described below only insofar as it differs therefrom; identical or equivalent parts of the assemblies 10; 10" will be identified, where possible, by the same reference numbers.

The assembly 10" differs from the assembly 10 in that the body 12" is rotatable with respect to the body 11" about the direction X instead of about the direction Z.

In particular, in the first configuration, the direction A and the direction Y are parallel to each other; in the second configuration, the direction B and the direction Y are parallel to each other.

In detail, the body 12" has a parallelepiped shape and comprises:
- a face 12a", at which the first connector 20 is arranged;
- a face 12b", at which the second connector 21" is arranged; and
- a face 12f", which is directed perpendicularly to the faces 12a" and 12b".

The body 12" further comprises:
- a face 12c" parallel to the face 12a";
- a face 12d" parallel to the face 12b"; and
- a face 12e" parallel to the face 12f''

In further detail, the face 12f" is also orthogonal to the direction X.

The electrical cables 30" and 31'' pass through the face 12f". In detail, the electrical cables 30" and 31'' are electrically connected to the first connector 20" and to the second connector 21" on the side of the inner volume 18 and exit from the inner volume 18 through the face 12f". Even more in detail, the electrical cables 30" and 31'' pass through the face 12f'' at respective distinct openings. Additionally, during rotation of the body 12" about the direction X, the electrical cables 30", 31" are wound around each other.

In the preferred embodiment illustrated in Figs. 5A and 5B, the assembly 10" comprises a shaft 40", which is rotatable about the direction X integrally with the body 12" and support it along the axis Z. Preferably, the shaft 40" is connected to the body 12" on the side of the face 12e".

In particular, the shaft 40" is rotated manually or automatically, by means of a related actuator.

Operation of the assembly 10" is similar to operation of the assembly 10; therefore, its description is omitted for the sake of brevity.

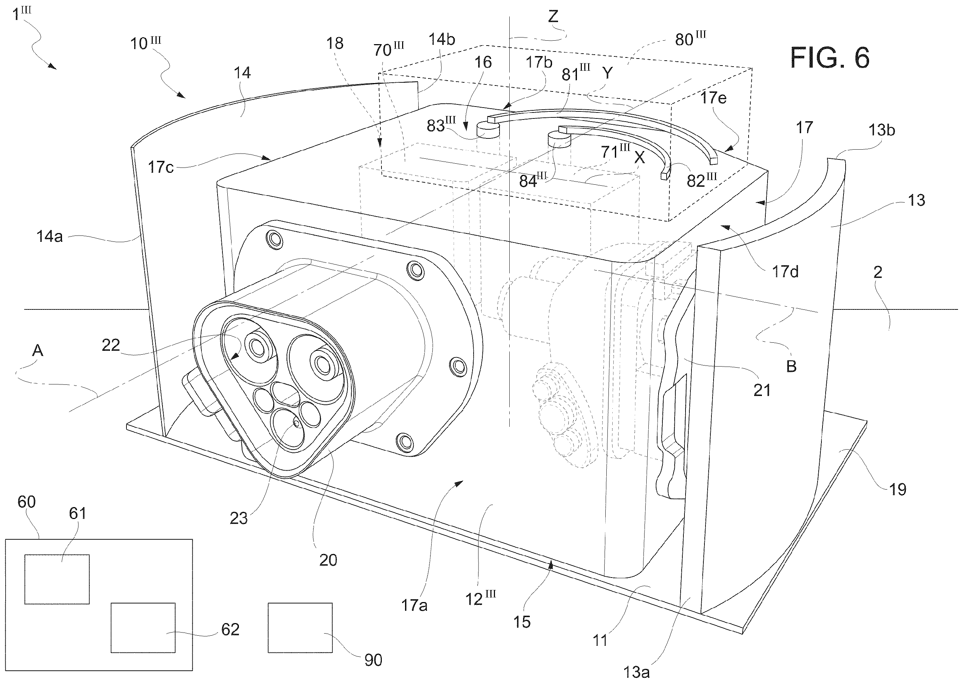

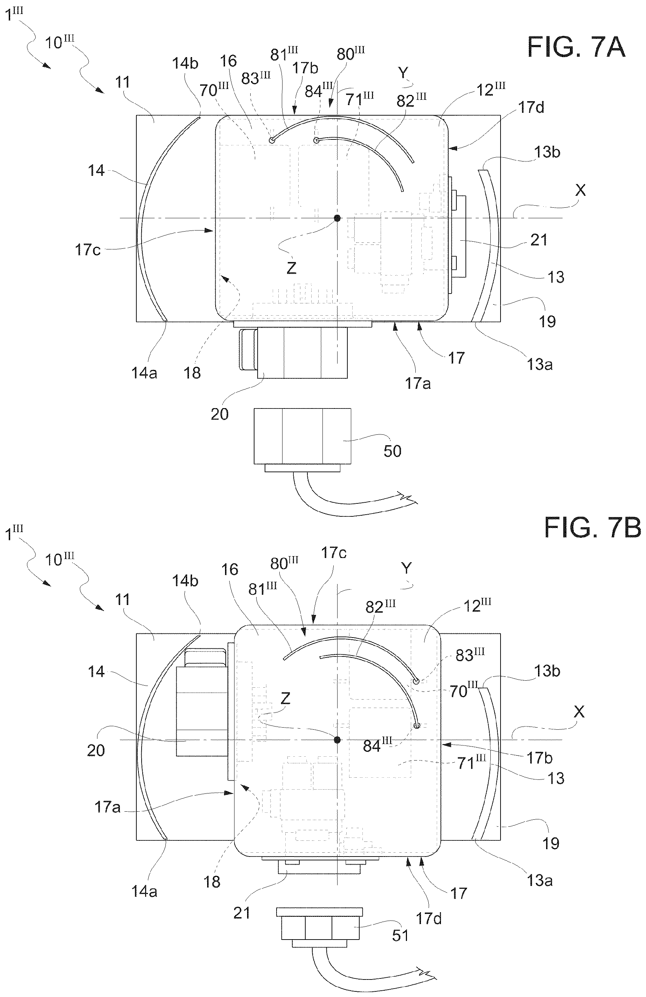

With reference to Figs. 6, 7A and 7B, the reference 1^{III} indicates a vehicle according to a fourth embodiment of the present invention. The vehicle 1^{III} is similar to the vehicle 1 and will be described below only insofar as it differs therefrom; identical or equivalent parts of the vehicles 1; 1^{III} will be identified, where possible, by the same reference numbers.

The vehicle 1^{III} differs from the vehicle 1 in that it comprises an electrical connector assembly 10^{III} in place of the assembly 10. The assembly 10^{III} is similar to the assembly 10 and will be described below only insofar as it differs therefrom; identical or equivalent parts of the assemblies 10; 10^{III} will be identified, where possible, by the same reference numbers.

The assembly 10^{III} differs from the assembly 10 in that it comprises a further body 80^{III} - only schematically illustrated - fixed to or integral with main body 2 or carried by the main body 2. The body 80^{III} comprises, in turn, two electrical contact elements 81^{III} and 82^{III} electrically connected to the electrical system 60.

Preferably, the body 80^{III} is arranged above the body 12^{III} along the direction Z. In detail, the electrical contact elements 81^{III} and 82^{III} are facing towards the upper surface 16.

The body 80^{III} has, for example, the shape of a cap. Moreover, preferably, the body 80^{III} is integral with and/or fixed to the body 11 and/or carried by the body 11.

As schematically illustrated in Figs. 7A and 7B, the electrical contact elements 81^{III} and 82^{III} have the shape of respective circular arcs, whose centre lies in the direction Z. In detail, the two electrical contact elements 81^{III} and 82^{III} are coplanar to each other. Preferably, the electrical contact elements 81^{III} and 82^{III} comprise respective brushes (only schematically illustrated in the figures).

The assembly 10^{III} differs from the assembly 10 also in that the body 12^{III} comprises two further electrical contact elements 83^{III} and 84^{III}, each of which is electrically connected both to the first electrical connector 20, and to the second electrical connector 21. The electrical contact elements 83^{III} and 84^{III} are adapted to be in contact respectively with the electrical contact elements 81^{III} and 82^{III} when the bodies 11 and 12^{III} are in the first configuration, in the second configuration and during the movement between the first configuration and the second configuration.

Preferably, the electrical contact elements 83^{III} and 84^{III} comprise respective brushes (again only schematically illustrated in the figures) configured to cooperate with the brushes of the electrical contact elements 81^{III} and 82^{III} and hence to allow the electrical connection of the first and of the second electrical connector 20, 21 to the electrical system 60. In more detail, the electrical contact elements 83^{III} and 84^{III} protrude from the inner volume 18 through the upper surface 16.

In further detail, the circular arc of the electrical contact element 81^{III} extends at least between the position taken by the electrical contact element 83^{III} when the assembly 10^{III} is in the first configuration and the position taken by the electrical contact element 83^{III} when the assembly 10^{III} is in the second configuration; the circular arc of the electrical contact element 82^{III} extends at least between the position taken by the electrical contact element 84^{III} when the assembly 10^{III} is in the first configuration and the position taken by the electrical contact element 84^{III} when the assembly 10^{III} is in the second configuration.

The assembly 10^{III} also comprises two contactors 70^{III}, 71^{III}, which are similar to the contactors 70 and 71. In more detail, each of the two contactors 70^{III}, 71^{III} is electrically connected to the first and to the second electrical connector 20, 21. Additionally, one of the two contactors 70^{III}, 71^{III} is electrically connected to the electrical contact element 83^{III} and the other of the two contactors 71^{III} is electrically connected to the electrical contact element 84^{III}.

Each contactor 70^{III}, 71^{III} is configured to:
- allow the passage of electrical current between the respective electrical contact element 83^{III}, 84^{III} and the electrical connectors 20, 21 when the first electrical connector 20 and the third electrical connector 50 engage with each other or when the second electrical connector 21 and the fourth electrical connector 51 engage with each other; and
- prevent the passage of electrical current between the respective electrical contact element 83^{III}, 84^{III} and the electrical connectors 20, 21 when the first electrical connector 20 and the third electrical connector 50 are disengaged from each other and when the second electrical connector 21 and the fourth electrical connector 51 are disengaged from each other.

Operation of the assembly 10^{III} differs from that of the assembly 10 in that during rotation of the body 12^{III} from the first configuration to the second configuration and vice versa, the brushes of the electrical contact elements 83^{III}, 84^{III} are in contact with the brushes of the electrical contact elements 81^{III}, 82^{III}.

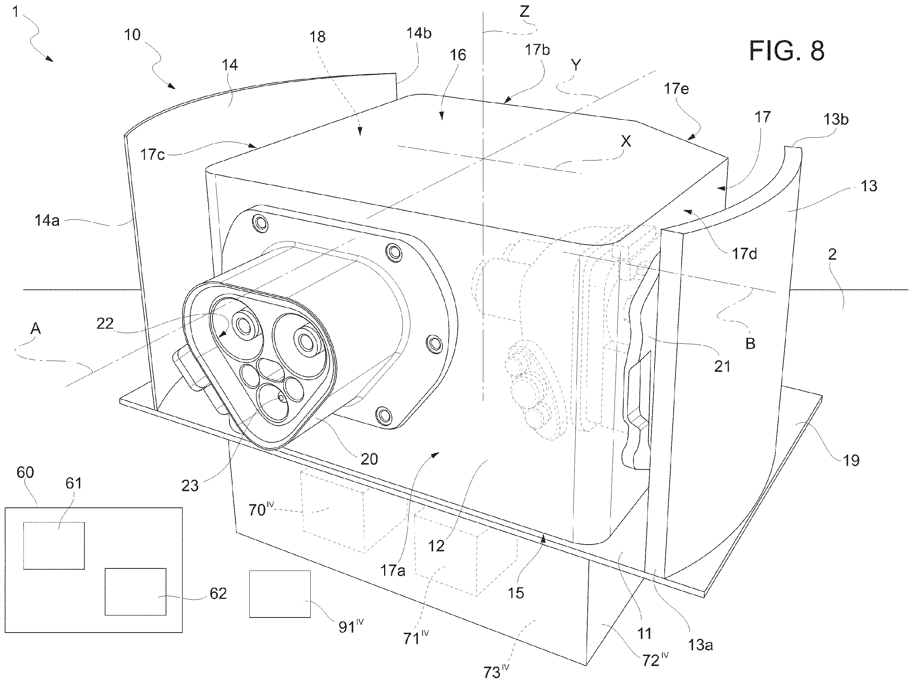

With reference to Fig. 8, the reference 1^{IV} indicates a vehicle according to a fifth embodiment of the present invention. The vehicle 1^{IV} is similar to the vehicle 1 and will be described below only insofar as it differs therefrom; identical or equivalent parts of the vehicles 1; 1^{IV} will be identified, where possible, by the same reference numbers.

The vehicle 1^{IV} differs from the vehicle 1 in that it comprises an electrical connector assembly 10^{IV} in place of the assembly 10. The assembly 10^{IV} is similar to the assembly 10 and will be described below only insofar as it differs therefrom; identical or equivalent parts of the assemblies 10; 10^{IV} will be identified, where possible, by the same reference numbers.

The assembly 10^{IV} differs from the assembly 10 in that the contactors 70^{IV} and 71^{IV} (only schematically illustrated) are integral with the body 11 and/or carried by the body 11 and hence integral with the main body 2 and/or carried by the main body 2, i.e., they do not rotate integrally with the body 12.

In detail, the assembly 10^{IV} comprises a body 72^{IV} fixed to or integral with main body 2 or carried by the main body 2 and comprising, in turn, an inner volume 73^{IV}. In further detail, the contactors 70^{IV} and 71^{IV} are housed in the inner volume 73^{IV}.

Specifically, the contactors 70^{IV} and 71^{IV} are electrically connected to the first and to the second electrical connector 20, 21 by means of the electrical cables or sliding contacts.

Preferably, the body 72^{IV} is arranged on the side of the base surface 19 opposite to the body 12.

The body 72^{IV} could be fixed to and/or integral with body 11 and/or carried by the body 11. Alternatively, the body 72^{IV} could be integrated in the body 11, i.e., form a single assembly.

Specifically, the body 72^{IV} is energy distribution unit (PDU) of the vehicle 1^{IV}. Therefore, the inner volume 73^{IV} preferably contains further electrical or electronic components of the vehicle 1^{IV} in addition to the contactors 70^{IV} and 71^{IV}.

Additionally, the assembly 10^{IV} comprises a cooling system 91^{IV} in place of the cooling system 90. The cooling system 91^{IV} is only schematically illustrated in Fig. 8 and is adapted to cool the body 72^{IV}. The cooling system 91^{IV} comprises one or more ducts adapted for a cooling fluid to pass through.

Operation of the assembly 10^{IV} is similar to operation of the assembly 10 and differs therefrom only in that, during rotation of the body 12 with respect to the body 11, the contactors 70^{IV} and 71^{IV} are integral with the main body 2 and/or carried by the main body 2.

From the above, the advantages of an electrical connector assembly 10; 10'; 10"; 10^{III}; 10^{IV} and a vehicle 1; 1'; 1"; 1^{III}; 10^{IV} according to the invention are evident.

In particular, since the first body 11; 11" and the second body 12; 12"; 12^{III} are movable with respect to each other between the first configuration and the second configuration, it is possible to ensure that only one between the first connector 20 and the second connector 21 is accessible to users and electrically connectable to the electrical energy source one at a time. This allows safe use of the assembly 10; 10'; 10"; 10^{III}; 10^{IV}, without having to use switches, at the same time limiting the risk of it being impossible to connect the vehicle 1; 1'; 1"; 1^{III}; 1^{IV} to a charging station due to incompatibility with the electrical connectors of the charging station and the risk of electrocution. Consequently, the assembly 10; 10'; 10"; 10^{III}; 10^{IV} provides an effective and lightweight alternative with respect to the prior art devices discussed in the introductory part of the present description.

Since the body 12; 12"; 12^{III} can rotate with respect to the body 11; 11", the movement from the first configuration to the second configuration can be obtained in a simple and efficient manner.

The embodiment in which the electrical cables 30' and 31' pass through the upper surface 16 is advantageous, as it allows deformation of the electrical cables 30', 31' during rotation of the body 12 about the direction Z to be limited.

Since the assembly 10; 10'; 10"; 10^{III} comprises the contactors 70; 70^{III} and 71; 71^{III}, which are both connected to the electrical connectors 20, 21, it is possible to check in a very compact and safe manner that no electrical current passes through the electrical connectors 20, 21 until one between the first and the second electrical connector 20, 21 is engaged by the respective third or fourth electrical connector 50, 51. In this way, it is possible to significantly limit the risks of electrocution for users who accidentally come into contact with the first or the second electrical connector 20, 21, for example during operations to engage the electrical connectors with each other.

Specifically, the configuration illustrated allows the use of only two contactors 70; 70^{III} and 71; 71^{III} instead of four. In fact, in a theoretical embodiment in which the first and the second electrical connector 20, 21 are both constantly accessible, it would be necessary to use two contactors for the first electrical connector 20 and two contactors for the second electrical connector 21.

The assembly 10^{III} comprises the electrical contact elements 81^{III}, 82^{III} in place of the electrical cables 30, 31. The electrical contact elements 81^{III}, 82^{III} are rotationally fixed and are adapted to cooperate with the electrical contact elements 83^{III}, 84^{III}, which instead rotate integrally with the body 12^{III} about the direction Z. Consequently, the electrical connection between the electrical connectors 20, 21 and the system 60 can be guaranteed without causing deformation of the electrical cables.

Since the contactors 70^{IV} and 71^{IV} are integral with the main body 2 and/or carried by the main body 2 and hence do not rotate integrally with the body 12, it is possible to limit deformation of the electrical cables 30 and 31. Additionally, since the contactors 70^{IV} and 71^{IV} are housed in the inner volume 73^{IV} it is possible to use the cooling system 91^{IV} (which is adapted to cool only the body 72^{IV}, which does not rotate) in place of the cooling system 90 (which is instead adapted to cool the body 12, which is rotatable). In fact, it has been observed that during charging of the vehicle, the heat generated by the contactors is generally greater than that generated by the first and by the second connector 20, 21. In particular, since the body 72^{IV} does not rotate, relative cooling by means of a cooling fluid can be implemented in a simple manner.

Finally, it is clear that modifications and variations can be made to the electrical connector assembly 10; 10'; 10"; 10^{III}; 10^{IV} and to vehicle 1; 1'; 1"; 1^{III}; 1^{IV} according to the present invention without departing from the scope of protection defined by the claims.

In particular, the assembly 10; 10'; 10"; 10^{III}; 10^{IV} could comprise more than two electrical connectors 20, 21. Alternatively or additionally, the electrical connectors 20, 21 could be two plugs of different types from each other adapted to be engaged - in at least some operating conditions of the assembly 10; 10'; 10"; 10^{III}; 10^{IV} - by respective sockets.

The assembly 10; 10'; 10"; 10^{III}; 10^{IV} could simultaneously comprise one or more sockets and one or more plugs between the electrical connectors 20, 21.

The body 12; 12"; 12^{III} could be fixed with respect to the main body 2 and the body 11; 11" could rotate with respect to the body 12; 12"; 12^{III}. According to this embodiment, the electrical cables 30, 31 remain fixed when the body 11; 11" rotates with respect to the body 12; 12"; 12^{III}. This prevents limiting deformation of the cables 30 and 31 during use.

The electrical contact elements 81^{III} and 82^{III} could have a curved shape different from that of a circular arc.

The electrical cables 30; 30'; 30'' and 31; 31'; 31'' could be cables that do not pass through the upper surface 16 or the lateral surface 17. In detail, the electrical cables 30; 30'; 30" and 31; 31'; 31'' could be completely housed in the inner volume 18; the vehicle 1; 1'; 1" could comprise further cables electrically connected to the system 60 and electrically connected to the electrical cables 30; 30'; 30'' and 31; 31'; 31" by means of respective electrical connectors.

The electrical contact elements 83^{III} and 84^{III} could be adapted to be in contact with the electrical contact elements 81^{III} and 82^{III}, respectively, when the bodies 11 and 12^{III} are in the first configuration and in the second configuration, but not also during the movement between the first configuration and the second configuration. In detail, the electrical contact elements 83^{III} and 84^{III} could comprise first snap fastening coupling means in place of the brushes configured to cooperate with second snap fastening coupling means of the electrical contact elements 81^{III} and 82^{III}. In further detail, the first and the second snap fastening coupling means are also adapted to allow electrical connection of the first and of the second electrical connector 20, 21 to the electrical system 60.

## Claims

1. An electrical connector assembly (10; 10'; 10"; 10^{III}; 10^{IV}) for a vehicle (1; 1'; 1"; 1^{III}; 1^{IV}), comprising:
- a first body (11; 11"); and
- a second body (12; 12"; 12^{III}) comprising at least a first electrical connector (20) and at least a second electrical connector (21);
said first body (11; 11") and said second body (12; 12"; 12^{III}) being movable with respect to each other between:
- a first configuration, wherein said first electrical connector (20) is adapted to be engaged by a third electrical connector (50) and said first body (11; 11") obstructs at least in part said second electrical connector (21); and
- a second configuration, wherein said second electrical connector (21) is adapted to be engaged by a fourth electrical connector (51) and said first body (11; 11") obstructs at least in part said first electrical connector (20).

2. Assembly according to claim 1, wherein said first electrical connector (20) and said second electrical connector (21) are electrical sockets of different types from each other or wherein said first electrical connector (20) and said second electrical connector (21) are electrical plugs of different types from each other.

3. Assembly according to claim 1 or 2, wherein said first electrical connector (20) and said second electrical connector (21) are arranged transversally to each other.

4. Assembly according to any one of the foregoing claims, wherein said first body (11; 11") is adapted to be fixed to or carried by a main body (2) of said vehicle (1; 1'; 1") and said second body (12; 12"; 12^{III}) is rotatable with respect to said first body (11; 11") between said first configuration and said second configuration.

5. Assembly according to claim 4, wherein said first body (11) defines:
- a first direction (X);
- a second direction (Y) transversal to said first direction (X); and
- a third direction (Z) transversal to said first direction (X) and said second direction (Y);
said first connector (20) and said second connector (21) being arranged orthogonally or substantially orthogonally to said third direction (Z);
said second body (12; 12^{III}) being rotatable with respect to said first body (11) about said third direction (Z).

6. Assembly according to claim 5, wherein said first body (11) comprises a first wall (13) and a second wall (14) spaced apart from each other along said first direction (X); said second body (12; 12^{III}) being interposed between said first wall (13) and said second wall (14) along said first direction (X); wherein said first wall (13) faces said second connector (21) and obstructs it at least in part when said first and second body (11, 12; 12^{III}) are in said first configuration; wherein said second wall (14) faces said first connector (20) and obstructs it at least in part when said first and second body (11, 12; 12^{III}) are in said second configuration.

7. Assembly according to claim 6, wherein said first wall (13) and said second wall (14) are curved in a plane perpendicular to said third direction (Z) and have concavity facing towards said second body (12; 12^{III}).

8. Assembly according to any one of claims 5 to 7, wherein said second body (12) comprises:
- a base surface (15) facing and/or cooperating with said first body (11);
- an upper surface (16) opposite to said base surface (15) along said third direction (Z);
- a lateral surface (17) interposed between said base surface (15) and said upper surface (16) along said third direction (Z); and
- an inner volume (18) delimited by said base surface (15), said upper surface (16) and/or said lateral surface (17) and adapted to contain at least in part said first connector (20) and said second connector (21);
said first connector (20) and said second connector (21) passing through said lateral surface (17);
said assembly (10) further comprising:
- a first electrical cable (30) adapted to electrically connect said first electrical connector (20) and said second electrical connector (21) to an electrical system (60) of said vehicle (1); and
- a second electrical cable (31) adapted to electrically connect said first electrical connector (20) and said second electrical connector (21) to said electrical system (60);
wherein said first electrical cable (30) and said second electrical cable (31) passing through said lateral surface (17).

9. Assembly according to any one of claims 5 to 7, wherein said second body (12) comprises:
- a base surface (15) facing and/or cooperating with said first body (11);
- an upper surface (16) opposite to said base surface (15) along said third direction (Z);
- a lateral surface (17) interposed between said base surface (15) and said upper surface (16) along said third direction (Z); and
- an inner volume (18) delimited by said base surface (15), said upper surface (16) and/or said lateral surface (17) and adapted to contain at least in part said first connector (20) and said second connector (21);
said first connector (20) and said second connector (21) passing through said lateral surface (17);
said assembly (10') further comprising:
- a first electrical cable (30') adapted to electrically connect said first electrical connector (20) and said second electrical connector (21) to an electrical system (60) of said vehicle (1'); and
- a second electrical cable (31') adapted to electrically connect said first electrical connector (20) and said second electrical connector (21) to said electrical system (60); wherein said first electrical cable (30') and said second electrical cable (31') passing through said upper surface (16).

10. Assembly according to claim 4, wherein said first body (11") defines:
- a first direction (X), in use, parallel to the ground;
- a second direction (Y) transversal to said first direction (X); and
- a third direction (Z) transversal to said first direction (X) and said second direction (Y);
said second body (12") being rotatable with respect to said first body (11") about said first direction (X).

11. Assembly according to claim 10, wherein said body (12") comprises:
- a first face (12a"), at which said first connector (20) is arranged;
- a second face (12b"), at which said second connector (21") is arranged and which is perpendicular to said first face (12a"); and
- a third face (12f"), which is perpendicular to said first and second faces (12a", 12b");
said assembly (10") further comprising:
- a first electrical cable (30") adapted to electrically connect said first electrical connector (20) and said second electrical connector (21) to an electrical system (60) of said vehicle (1"); and
- a second electrical cable (31") adapted to electrically connect said first electrical connector (20) and said second electrical connector (21) to said electrical system (60); wherein said first electrical cable (30") and said second electrical cable (31") pass through said third face (12f").

12. Assembly according to any one of claims 8 to 11, comprising:
- a first contactor (70; 70^{IV}) electrically connected to said first electrical connector (20) and said second electrical connector (21) and electrically connected to one of said first electrical cable (30; 30'; 30") and said second electrical cable (31; 31'; 31");
- a second contactor (71; 71^{IV}) electrically connected to said first electrical connector (20) and said second electrical connector (21) and electrically connected to the other one of said first electrical cable (30; 30'; 30") and said second electrical cable (31; 31'; 31");
said first contactor (70; 70^{IV}) and said second contactor (71; 71^{IV}) being configured to:
- allow the passage of electrical current between the first or second electrical cable (30; 30'; 30", 31; 31'; 31") and the first and second electrical connectors (20, 21) when, in use, said first electrical connector (20) and said third electrical connector (50) engage with each other or when said second electrical connector (21) and said fourth electrical connector (51) engage with each other; and
- prevent the passage of electrical current between the respective first or second electrical cable (30; 30'; 30", 31; 31'; 31") and the first and second electrical connectors (20, 21) when, in use, said first electrical connector (20) and said third electrical connector (50) are disengaged from each other and when said second electrical connector (21) and said fourth electrical connector (51) are disengaged from each other.

13. Assembly according to claim 12, wherein said first contactor (70) and said second contactor (71) are carried by said second body (12); or wherein said first contactor (70^{IV}) and said second contactor (71^{IV}) are carried by said first body (11).

14. Assembly according to any one of claims 1 to 7, comprising a third body (80^{III}), which is adapted to be fixed to or to be carried by a main body (2) of said vehicle (1^{III}); said third body (80^{III}) comprising, in turn, two first electrical contact elements (81^{III}, 82^{III}), which are adapted to be electrically connected to an electrical system (60) of said vehicle (1^{III}); said second body (12^{III}) comprising second electrical contact elements (83^{III}, 84^{III}), each electrically connected both to said first electrical connector (20) and said second electrical connector (21); said second electrical contact elements (83^{III}, 84^{III}) being adapted to cooperate in contact with said first electrical contact elements (81^{III}, 82^{III}), respectively.

15. Assembly according to claim 14, wherein said first electrical contact elements (81^{III}, 82^{III}) and said second electrical contact elements (83^{III}, 84^{III}) comprise respective brushes, which are configured to cooperate in contact with one another.

16. Assembly according to claim 14 or 15, comprising:
- a first contactor (70^{III}) electrically connected to said first electrical connector (20) and said second electrical connector (21) and electrically connected to one of said second electrical contact elements (83^{III}, 84^{III});
- a second contactor (71^{III}) electrically connected to said first electrical connector (20) and said second electrical connector (21) and electrically connected to the other of said second electrical contact elements (83^{III}, 84^{III});
said first contactor (70^{III}) and said second contactor (71^{III}) being configured to:
- allow the passage of electrical current between the respective second electrical contact element (83^{III}, 84^{III}) and the first and second electrical connectors (20, 21) when, in use, said first electrical connector (20) and said third electrical connector (50) engage with each other or when said second electrical connector (21) and said fourth electrical connector (51) engage with each other; and
- prevent the passage of electrical current between the respective second electrical contact element (83^{III}, 84^{III}) and the first and second electrical connectors (20, 21) when, in use, said first electrical connector (20) and said third electrical connector (50) are disengaged from each other or when said second electrical connector (21) and said fourth electrical connector (51) are disengaged from each other.

17. Vehicle (1; 1'; 1"; 1^{III}; 1^{IV}) comprising:
- a main body (2);
- an electrical system (60);
- an electrical connector assembly (10; 10'; 10"; 10^{III}; 10^{IV}) according to any one of the foregoing claims;
wherein said electrical connector assembly (10; 10'; 10"; 10^{III}; 10^{IV}) is electrically connected to said electrical system (60).
